Europäisches Patentamt

European Patent Office

Office européen des brevets

(11) Publication number: **0 217 415 B1**

# EUROPEAN PATENT SPECIFICATION

(45) Date of publication of patent specification: **04.09.91** (51) Int. Cl.5: **C03B 5/16**

(21) Application number: **86113737.0**

(22) Date of filing: **03.10.86**

(54) Method and apparatus for heating glass batch material.

(30) Priority: **04.10.85 US 783964**
**04.10.85 US 784188**

(43) Date of publication of application:
**08.04.87 Bulletin 87/15**

(45) Publication of the grant of the patent:
**04.09.91 Bulletin 91/36**

(84) Designated Contracting States:
**AT BE CH DE ES FR GB IT LI NL**

(56) References cited:
**GB-A- 1 020 567**
**SU-A- 656 982**
**US-A- 2 958 161**
**US-A- 4 381 934**
**US-A- 4 544 394**

(73) Proprietor: **GAS RESEARCH INSTITUTE**
**8600 West Bryn Mawr Avenue**
**Chicago Illinois 60631(US)**

(72) Inventor: **Stickler, David Bruck**
**15 Indian Hill Road**
**Carlisle, Massachusetts(US)**
Inventor: **Westra, Leonard F.**
**11 Copeland Avenue**
**Reading, Massachusetts(US)**
Inventor: **Woodroffe, Jaime A.**
**32 Cross Street**
**Andover, Massachusetts(US)**

(74) Representative: **Baillie, Iain Cameron et al**
**c/o Ladas & Parry Isartorplatz 5**
**W-8000 München 2(DE)**

## Description

This invention relates to producing a glass product by heat processing of glass and/or glass forming material and more particularly to a method of and apparatus for melting and making glass.

The regenerative open-hearth type glass furnace is the primary design used for glass melting in the United States and other parts of the world. Over the years, many design changes have been made, but the fundamental heat transfer mechanisms are still quite similar to those introduced by the Siemens family in the late 1800's.

Most glasses are prepared by charging raw materials into a furnace heated to about 1093° C. (2000° F.) or more to melt and react the raw materials to form a bed of molten glass. The raw materials (including previously made glass and/or cullet) are usually called "batch" and in producing glass it may, for example, comprise a source of sodium such as sodium carbonate and a source of silica such as sand, as well as other or different compounds or minerals. The "batch" is charged to the furnace and floats on previously produced molten glass until it melts and reacts to become part of the glass bed. The terms "glass batch", "glass batch material", and "batch" as used herein and in the Claims are used generically and include glass, cullet, and/or necessary or appropriate raw materials for making and/or processing all kinds of glass.

The large surface areas of open-hearth type furnaces, even with substantial insulation, lead to wall heat transfer losses that are on the order of 20 percent of the thermal input to the melter. These high wall losses together with heat losses from the stack gases and from the cooling of the molten glass itself are major factors contributing to the low operating efficiency characteristic of current glass furnace design.

In the glass industry, it is common to quote furnace performance in terms of a heat rate which is defined as the fuel thermal input to the furnace per ton of glass melted. Thus, for example, for a furnace heat rate measured in terms of 1163 kJ/kg ($10^6$ BTU/ton) of glass melted, typical heat rates for container glass are about 5.0 - 5.5, for float glass it is about 6.0, and for fiberglass it is about 7.0.

The average present day container glass furnace has a heat rate of about 2.53 times the theoretical maximum. This corresponds to a thermal efficiency, defined as the heat absorbed by the glass batch in the melting process to the thermal input to the furnace, of slightly less than 40 percent. Improvements in existing regenerative furnace designs suggest that, in the absence of emission controls, thermal efficiency on the order of a maximum of 50-55 percent may be possible. However, provisions for pollution control and efficient control of $NO_x$ emissions leads to a significant derating of as much as 10 percent in furnace performance in addition to a substantial increase in capital and/or operating costs for the glass furnace. The efficient utilization of energy and compliance with environment standards are therefore recognized as major problems in the operation of current fossil fuel-fired glass melting and glass making systems.

Of the present day glass melting furnaces that are not of the open-hearth design, one is a special purpose furnace that has been developed for producing reflective glass beads from cullet. This type of special purpose furnace is a vortex combustion furnace wherein a burner at the bottom of an updraft furnace produces a vorticial flow of combustion gases and entrained cullet. The particles of cullet follow a spiral path in the vortex, are heated, melted to form glass beads, cooled, and finally collected at the bottom of the furnace. For a further discussion, reference is made to U.S. Patent Number 4,475,936.

Another glass melting furnace not of the open-hearth design is described in U.S. Patent No. 4,381,934. This patent is directed to the first stage of dual stage melting or production of glass. In this first stage, a transient layer of incompletely melted glass batch material comprising a foamy opaque fluid including unmelted sand grains and the like is produced on a pedestal disposed within a heating chamber. Dry glass batch material is mechanically continuously deposited on the pedestal as by a screw feeder or the like. Heat for melting is provided by a plurality of radiant sources arranged to provide substantially uniform heat to all sides of the pedestal. As the dry glass batch material liquifies, an incompletely melted layer runs down the surface of the pedestal and falls into a pool whereafter fining and completion of the formation of the glass product occurs.

A further proposed glass melter or furnace more fully disclosed in U.S. Patent Nos. 4,544,394 and 4,553,997 is a derivative of the slagging coal combustor developed for magnetohydrodynamic (MHD) power generation applications. For a further discussion of such slagging coal combustors and cooled walls used therein see the reference set forth hereinafter. In extending this MHD combustor technology to the conceptual design of a glass melter, rather than burning coal, it is proposed that finely pulverized glass batch be heated very rapidly by injecting it into a gas-fired combustor. The high temperature batch, (which in the case of coal combustion originates as coal mineral content and forms slag which is a glassy material) under control of the fluid dynamics of a multiple burner, vortex design, is projected to the walls of a melting chamber where it thereafter flows down as a viscous layer (in the same manner as slag) and through a glass tap in the bottom of the furnace. The layer of glass on the melter walls also functions to insulate the walls in the same manner as in the aforementioned slagging coal combustors. Assuming effective downstream heat recovery, thermal efficiencies as high as 75 percent have been predicted. The melting process is accomplished by preheating the batch materials disposed in suspension within an injector/burner assembly comprising a plurality of burners located and directed to generate an upwardly directed vorticial flow, mixing and fusing the batch particles within the upwardly directed vortex generated by the burners, and depositing agglomerated glass particles and/or individual batch droplets/particles on the vortex melter top wall by fluid mechanical centrifugal forces generated by the vortex flow. The melting process in the vortex melter is accomplished by the combined effects of conductive, convective, and radiative heat transfer from the gas to particles in suspension which have a large total surface area, as opposed to conventional techniques in which the surface area of the batch exposed to heat transfer is a small portion of the theoretical bulk charge particle surface area. This type of melter operates at high combustion intensities and wall heat fluxes. However, because of the relatively small surface area of the melter, the total enthalpy losses relative to the total thermal input is small although the walls must be both cooled and non-reactive with glass. Experience with slagging magnetohydrodynamic coal combustion suggest that wall heat transfer losses may be expected to be 5 - 7 percent of the thermal input, as opposed to conventional glass melters which have wall heat transfer losses on the order of about 15-25 percent or more.

The container glass, flat glass, and fiberglass industry are the primary bulk glass producers in the United States and account for more than 90 percent of the total glass produced. It is these glass industry segments which will be most significantly impacted by increases in fuel costs and/or additional pollution control regulations, and therefore have the greatest need for improved gas-fired furnace designs.

## SUMMARY OF THE INVENTION

The present invention provides a method of and apparatus for heat processing particulate material wherein finely pulverized glass batch material is heated very rapidly by preheating and mixing glass batch material in suspension in preheated oxidizer and/or fuel flow in an injector assembly, heating the glass batch material to a high temperature in the burner assembly, directing the products of combustion and high temperature batch material suspended therein through an accelerating nozzle, to form a preferably downwardly directed preferably linear flow having a small cross-sectional area, and causing the accelerated directed flow exiting from the nozzle to impact on an impact surface, the high temperature batch material adhering to this impact surface which may form part of a central body, and then flow down its sides to a collection zone. The invention is characterized in that the impact surface area is laterally spaced from adjacent interior spaces of the separation chamber, and the nozzle is spaced from the impact surface a distance not greater than about three times the first dimension. In accordance with the present invention, glass batch material is heated in suspension in the products of combustion to a condition at which it can form a flowing layer on the impact surface and rapidly react to form glass product.

In addition to efficient heat transfer, in accordance with a feature of the present invention, highly effective glass fining may be provided by a thin flowing melt layer having strong internal shear motion more fully discussed hereinafter. Thus, prior art fining agents, such as sulfates, are not required and this eliminates a source of $SO_x$ pollutant emission. The present invention also allows acoustic control of combustion stoichiometry, so that carbon addition to the batch, as would normally be required for reduced flint glass production, is not necessary.

Glass melters in accordance with the present invention have a higher degree of efficiency than that of the vortex type melter and cost substantially less to construct and operate due to its improved construction and operating features.

Another feature of furnaces constructed in accordance with the present invention is the control of pollutants. The furnace operating characteristics and its design features also result in a reduction of material carryover from the furnace by impact, volatilization and physical entrainment than that which may be expected to be present in the vortex type furnace. Thus, the amount of particulates in the exhaust gas and emission control equipment needed are reduced to a minimum. For a further discussion of pollutant control reference is made to our Patent Application Serial No.

The present invention permits the provision of a glass melting furnace that is a very small fraction of the size of a conventional open hearth melting furnace. Such a furnace can provide improved operating efficiency over current melting systems by at least about 50 percent or more while at the same time reducing capital costs by at least about 40 percent or more. Still, further, the present invention permits achievement of all of the above noted advantages as well as control of the generation of all pollutants to a level at or below that presently deemed to be a maximum with minimum if any material carryover in the exhausting gases.

## THE DRAWINGS

Figure 1 is a schematic side elevation view of apparatus in accordance with the invention;

Figure 2 is a fragmentary elevation end view of a nozzle having a substantially rectangular outlet and associated impact surface;

Figure 3 is a side elevation view of the nozzle and impact surface of Figure 2 taken on line 3-3;

Figure 4 is a fragmentary side elevation view with parts broken away of a further embodiment of the nozzle and impact surface wherein the nozzle and impact surface cooperate to define an annular nozzle outlet;

Figure 5 is a fragmentary side elevation end view of a still further embodiment of a nozzle similar to that of Figure 2, but wherein the nozzle has a plurality of rectangular outlets; and

Figure 6 is a bottom view of the nozzle of Figure 5 taken on line 6-6.

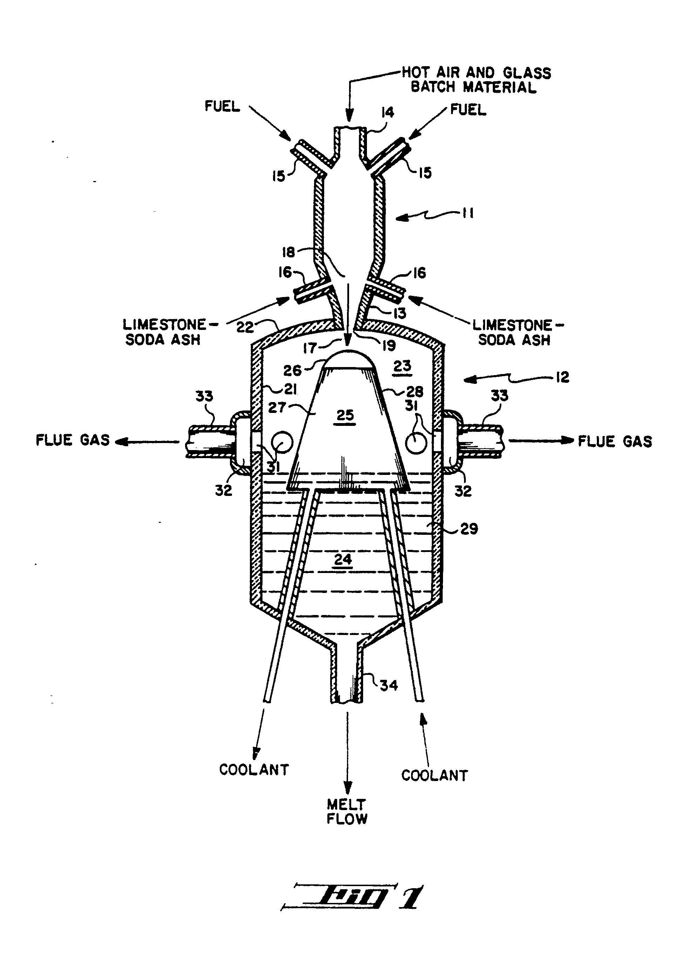

Referring now to Figure 1, this figure illustrates by way of example the process and apparatus of the present invention for heat processing glass batch material such as melting cullet and/or melting raw materials for forming glass and provide a bed of molten glass for use in a conventional manner.

Fuel, oxidizer and glass batch material are introduced into the combustion chamber as shown in Figure 1. The fuel may include petroleum fuel, but preferably is a gaseous fuel such as, for example, natural gas, and the oxidizer is preferably preheated air and/or oxygen enriched air.

The combustion chamber 11 may be of any conventional construction suitable for operation at high temperatures and processing glass batch material and is coupled to a separation chamber 12 by a 13 nozzle more fully described hereinafter.

The fuel and air are introduced, mixed and burned in conventional manner to produce products of combustion to heat glass batch material entrained therein to the necessary reaction and/or glass melting temperature as more fully described hereinafter. In the combustion chamber 11, the reaction of fuel and air provides combustion products of about 1371°C to 2204°C (2500° to 4000°F.) depending on the type, temperature and quantity of the fuel, oxidizer and glass batch material used and to what extent preheating is used.

Preferably, preheated glass batch material which may comprise, for example, preheated silica sand, cullet, syenite and sodium and calcium minerals are heated and homogenously dispersed in conventional manner in the oxidizer or air flow which is introduced into the combustion chamber through pipe 14. Fuel, preferably natural gas, is introduced through pipes 15, mixed with the oxidizer or air, ignited by a conventional flame holder, and burned in conventional manner in the combustion chamber 11. Satisfactory thermal equilibrium of this two phase flow may be expected to require a flow time of about 30 msec or more before injection into the combustion chamber. A suitable equilibrium particle and air temperature is in the range of about 816°C (1500°F) and may be introduced at a pressure of about .204 Pa (3 psig). The air may be preheated to a temperature to about 1.204°C (2200°F) for a glass batch material flow rate approximately equal to the combustion gas flow rate. The glass batch material in turn may be preheated to a temperature of about 316°C (600°F.)

Since silica, cullet and syenite and the like do not appear to have a major impact on flame stability, they are preferably introduced into the oxidizer or air flow and entrained in the products of combustion. However, since carbonates such as limestone, soda ash and the like may have an adverse effect on flame stability they should be entrained into the products of combustion downstream of the ignition point as through pipes 16. The combustion chamber size scale is controlled by throughput, volumetric heat release and particle heat transient time.

The products of combustion and entrained glass batch material are exhausted from the combustion chamber 11 through a convergent nozzle 13 that provides an exit velocity of about several hundred feet per second or more. A convergent nozzle with a convergence half angle of about ten degrees will provide an acceptable particle velocity slip. The nozzle 13 preferably provides uniform particle distribution in the products of combustion which is exhausted by the nozzle as a directed, exhaust stream 19. Glass batch material carbonate particulates such as, for example, limestone and soda ash may be homogeneously dispersed in and introduced at the nozzle flow region 18 to minimize the time during which they are exposed to high temperatures before inclusion in the melt layer. The products of combustion should provide a heat rate of about 3384 kJ/kg (2.91 x 10⁶ Btu/Ton) of glass and to preferably produce molten glass at a temperature of about 1427°C (2600°F) for a conventional sodalime glass for example. Glass melting reactions can occur at temperatures as low as about 1900°F. but the reaction times for such low temperatures are too long for practical glass melting operations in accordance with the present invention.

The exhaust stream 17 exits from the nozzle outlet 19 into a separation chamber 12. While the configuration of the separation chamber is not critical, it may be, for example, cylindrical as shown in Figure 1 or other conventional shape and formed in conventional manner for production of glass and operation at glass melting high temperatures. It is not intended, and the design of the separation chamber should be such that very little and preferably no glass batch material (except possibly for purposes of insulation) be deposited on the exposed inner wall surfaces 21 of the separation chamber 12. The outlet 19 of the nozzle 13 for an embodiment as shown by way of example in Figure 1 is centrally disposed in the top wall 22 of the separation chamber 12. The nozzle 13 and separation chamber 12 may each have a line of symmetry, each be symmetrical with its line of symmetry and these lines of symmetry should be at least substantially coincident one with another.

The separation chamber is provided with an upper separation portion 23 and a lower glass collection portion 24. Disposed within the separation chamber is a center body member 25 having an upper impact surface portion 26 disposed in the separation chamber upper portion 23 and a glass flow portion 27 extending from the impact surface portion to the lower molten glass collection portion 24 of the separation chamber. While the impact surface portion 26 may have a configuration other than generally hemispherical as shown in Figure 1, it should have and be at least substantially symmetrical with its line of symmetry at least approximately coincident with the line symmetry of the nozzle. Further, the impact surface should be of a size and configuration and spaced a distance from the nozzle outlet that substantially all of the entrained glass batch material in the exhaust stream 17 emanating from the nozzle outlet 19, and especially the smaller sized particles, will strike the impact surface.

The impact surface portion 26 as shown in Figure 1 is illustrated for purposes of example, essentially hemispherical in shape and spaced from the nozzle outlet 19 preferably not more than several times the diameter (if circular) or minimum dimension of the nozzle outlet (if noncircular). A suitable distance is about 2.5 times the diameter of a circular nozzle outlet. The impact surface portion 26 must be closely spaced to the nozzle outlet to provide effective separation of the glass batch material from the products of combustion. This is necessary because as this distance is increased greater and greater quantities of the smaller size particles will be carried past the impact surface portion by the gas flow:

In general the distance of the nozzle 13 from the impact surface 26 is not greater than about three times a minimum interior diameter of the nozzle outlet 19, which minimum diameter can be expressed in terms of the fact that in a plane normal to the direction of flow through the nozzle, there is a first internal dimension normal to and not greater than a second internal dimension lying in said normal plane, said first internal dimension being the effective minimum diameter of the nozzle. Furthermore, the impact surface portion 26 is laterally spaced from adjacent interior surfaces 21 of the separation chamber 12, thereby permitting the glass to flow to the adjacent surface 27 and eventually to the collection region 24.

The glass flow portion 27 is provided with a smooth generally conical outer surface 28 extending from the impact surface portion 26 to and into the molten glass collection portion 24 to receive the melt flow or molten glass flow from the impact surface portion 26 and direct it into the molten glass pool 29 in the glass collection portion 24 of the collection chamber. As will become evident hereinafter, the nozzle and center body member need not be annular in shape as shown by way of example in Figure 1.

In practice it is advantageous to provide cullet, or the like, in the glass batch material. This is effective in improving the adherence of other glass batch material since some may not be softened or melted when it reaches the impact surface portion 26 whereas the cullet is more likely to be or become molten at or shortly after it impacts on the impact surface portion 26. This facilitates the continuous provision of a molten layer on the impact surface portion 26 which will capture most if not all of any unmelted particles.

Uniformly spaced flue gas ports 31 are provided in the side walls of the separation chamber for receiving the products of combustion or flue gas at a level preferably a short distance above the top of the molten glass pool 29 and directing them circumferentially uniformly into a plenum chamber 32 where they can be withdrawn through pipe 33 and thereafter directed to heat exchangers and the like and used in conventional manner. Molten glass is removed from the molten glass pool via pipe 34 and used in conventional manner.

The provision of apparatus in accordance with the present invention wherein the exhaust stream having a first line of symmetry corresponding to that of nozzle 14 is caused to exit from a combustion chamber via the nozzle and impact on a closely spaced preferably hemispherical impact surface portion having a second line of symmetry substantially coincident with the first line of symmetry to a separation chamber, in addition to other numerous other advantages discussed earlier, provides, as compared to the prior art, more simply, efficiently, and economically, particle capture and improved distribution uniformity and homogenization of the glass batch material.

Separation of the glass batch material at the impact surface portion 26 utilizes the inertia of the glass batch material in the sharply turned gas flow field generated at the impact surface portion. In addition to the advantages noted immediately herein above, the present invention provides substantially improved separation because of the close proximity of the nozzle outlet 19 and the impact surface portion 26 which for any given velocity provides minimum turbulence, maximum turning of the gas flow at maximum velocity for minimum pressure drop, and maximum separation.

The impact surface portion 26 and flow surface portion 27 may be each formed of a first outer or exposed metal member (not shown) on which glass batch material is deposited and a second inner or rear metal member having disposed between them coolant passages (not shown) for receiving a coolant such as water adapted to maintain the outer metal member at less than its failure temperature. The cooling of the outer metal member is effective in preventing its failure and in causing molten glass batch material at the exposed surface of the inner metal member to solidify and therefore function to protect it from erosion by the high temperature glass batch material being continuously deposited.

The above-noted water-cooled portions provide surfaces to which the particles of glass batch material can adhere to form a continuous layer of glass which builds up to an equilibrium thickness based on the gas shear forces, melt viscosity and gravity. At equilibrium, the aforementioned glass layer comprises an inner layer of frozen or solidified glass with a steep temperature gradient and is covered with a preferably thin layer of molten glass at a temperature somewhat lower than the gas temperature.

Broadly, heretofore, the most successful method of causing a silicate slag material to adhere to a cooled metallic surface has been to provide in the cooled surface regularly spaced ceramic surfaces to which the slag will readily adhere. For this purpose, castable ceramic material may be trowled into machined grooves which may be typically 0.64 cm. (one-fourth inch) wide at a 1.27 cm. (one-half inch) pitch. From these initial attachment points, slag was found to gradually bridge over the exposed metal to form a continuous uniform layer. The walls to which the glass batch material adheres may be of similar prior art construction which will provide the same result. Another wall treatment which may be used is the provision of a continuous ceramic coating applied by a plasma gun.

The technology establishing a coating as a flow over a cooled metal wall as noted above was extensively developed during the past decade with specific orientation toward the use of silicate slags derived from coal combustion as erosion barriers and insulators. This technology development had its origin in open cycle NHD power generation hardware testing and was aimed at developing wall structures for MHD components that would be compatible with high temperature silicate slags from coal combustion products.

For more thorough discussion of this technology as well as the construction and fabrication of suitable impact surface and flow members, reference is made to "Replenishment Analysis and Technology Development," by D. B. Stickler and R. DeSaro, Sixth International Conference on MHD Electrical Power Generation, Washington, DC, June 1975; "Controlled Utilization of Coal Slag in the MHD Topping Cycle," by D. B. Stickler and R. DeSaro, presented at the Engineering Foundation Conference on Ash Deposits and Corrosion Due to Impurities in Combustion Gases, held at New England College, Henniker, NH, June 26 - July 1, 1977; "Slag-Coated Wall structure Technology for Entrained Flow Gasifiers," by D.B. Stickler and R.E. Gannon, presented at the 1981 International Gas Research Conference, September 28 - October 1, 1981, Los Angeles, CA which are hereby incorporated herein as if set out at length; "Unique Combustion System for Oil to Cool Conversions," by R.K. Mongeon and D.B. Stickler, presented to Joint Power Generation Converence, Toronto, Canada, September 30 - October 4, 1984 and Industrial Power Conference, Philadelphia, Pennsylvania, October 28-31, 1984; and "Toroidal Flow Pulverized Coal-Fired MHD Combustor", by J.O.A. Stankevisc, A.C.J. Mattson, and D.B. Stickler, presented at the Third Coal Technology Europe 1983 Conference, Amsterdam, The Netherlands, October 11-13, 1983.

Alternately, it is to be understood that the impact surface portion 26 and/or the flow surface portion 27 may be comprised of any suitable ceramic or other material that is non-reactive with glass.

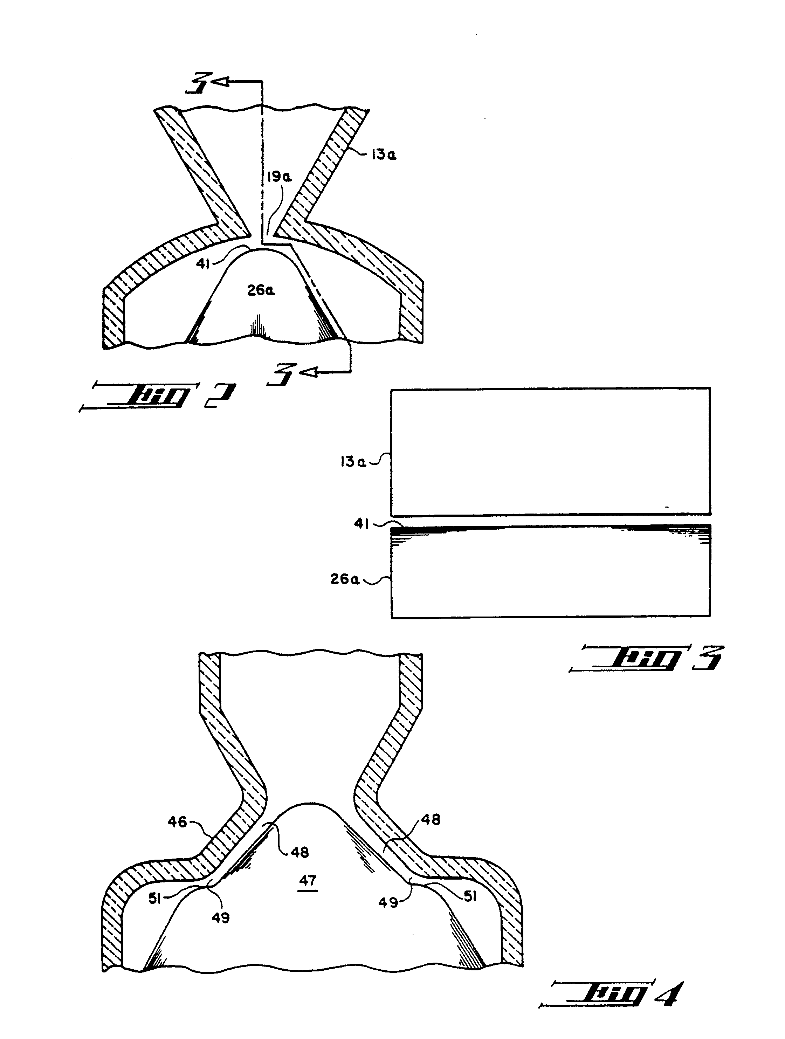

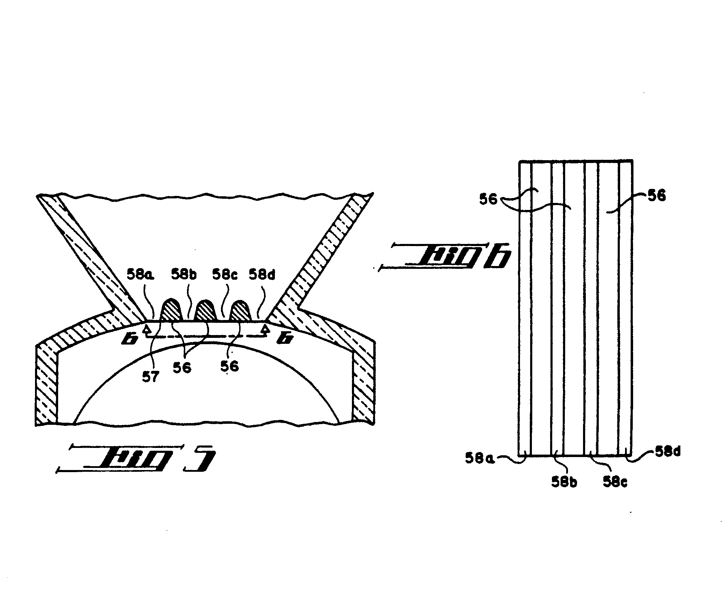

Attention is now directed to Figures 2 and 3 which show an alternate embodiment of the nozzle 13 and an impact surface portion 26a combination. In this case, the nozzle 13a and its outlet are rectangular in configuration and the impact surface portion 26a is substantially wedged shaped with a smoothly curved apex 41. The impact surface portion 26a as previously noted, is at least substantially symmetrical with its line of symmetry which is coincident with the nozzle line of symmetry.

Figure 4 shows a further embodiment of the nozzle and impact surface. In this case, the nozzle is provided with a divergent lower portion 46 and in cooperation with an upwardly projecting generally conical portion 47 of the impact surface forms a convergent annular nozzle 48 having an annular nozzle outlet 49. A short distance downstream from the nozzle outlet the upwardly projecting portion is provided with an outwardly extending curved annular surface or shoulder 51 which uniformly directs the exhaust stream circumferentially outwardly. It will occur to those skilled in the art that the above-noted arrangement for providing an annular outlet can also be provided with other configurations including a continuously convergent nozzle.

A still further embodiment of the nozzle impact surface combination is shown in Figures 5 and 6 where elongated wedge shaped members 56 disposed at the nozzle outlet 57 form a plurality of further nozzles 58 a, b, c, and d each having a generally rectangular cross section. Other configuration for nozzle impact surface combinations will occur to those skilled in the art.

The configuration of the center body member and separation chamber is preferably chosen to provide maximum uniform flow of separated combustion products adjacent the impact surface portion and melt flow on the flow surface portion. This is desirable to provide drive for the melt flow from the impact surface to the molten glass pool, and more importantly, to provide strong, internal shear motion in the melt flow. In operation, there may be as previously noted, solidified glass adhering to the flow surface and molten glass covering the solidified glass. This molten glass flow from the impact surface to the molten glass pool is driven by the products of combustion or flue gas flowing toward the flue gas ports and by gravity. If operating conditions are controlled to provide a thin layer of flowing melt flow, for example, of the order of about one-sixteenth inch thick, preferably in combination with control of the separated products of combustion to produce strong internal shear motion in the melt flow, the distance or time required for a unit of molten glass to flow from the impact surface to the molten glass pool such, as for example about ten seconds or more can be easily provided whereby bubbles and/or undissolved gas in the melt flow will have more than sufficient time to immigrate or travel to the exposed surface of the melt flow and enter the flue gas flow. Similarly, unreacted particles and the like will also have more than sufficient time to complete their reaction and similarly disappear.

The provision of a temperature gradient through the melt flow, as by making the flow surface a cooled surface, as discussed hereinbefore, produces temperature gradient in the melt flow. The resulting temperature gradient through the flowing glassy material results in a gradient in surface tension around entrapped gas bubbles. This gradient in surface tension enhances the transport of bubbles to the interface with the flue gas flow and removal from the glass melt.

The provision of the above-noted control of operating parameters results in highly effective glass fining and obviates the use of conventional fining agents such as sulfates to enhance melt formation and/or fining. Further, since the above-described process does not require sulfur additives, there will be negligible $SO_x$ concentration in the flue gas exhausted from the separation chamber.

As noted above, there will be no $SO_x$ produced in the products of combustion or flue gas (except for very small quantities of sulfur components sometimes contained in natural gas fuel and as a trace component in cullet obtained from prior art glass) because the sodium necessary for glass making need only be supplied entirely as sodium carbonate. Therefore, in apparatus in accordance with the present invention, $SO_x$ will not represent an emission control problem.

The formation of more troublesome $NO_x$ may be controlled to levels near, if not substantially less than a desired efficient level of about of 2kg $NO_x$/1000kg 4 lb $NO_x$/ton) of glass ($NO_x$ emission of 3.5kg $NO_x$/1000kg 7lb/ton) of glass or more is typical for prior art processes) by con-trolling the extent of initial formation of $NO_x$ in the high temperature combustion products which may be as high as about 2204°C (4000°F).

It is to be understood that the scope of the present invention includes, for example, albeit a less desirable embodiment, effectively turning the apparatus of Figure 1 inside out and placing the combustion chamber within the separation chamber whereby the exhaust stream from the nozzle is now directed upwardly and impacts on the top wall which may now be concave and which is formed and functions as heretofore described as the impact surface portion and the walls of the separation chamber now become the flow portion.

Further, a series of nozzle-center body combinations may be provided to increase output. It is to be further understood that the provision of a hot gas stream for melting glass batch material need not be limited to combustion sources and where desired may be supplied or supplemented by other radiant energy sources such as, for example, electric arcs plasma sources, nuclear energy and the like or any combination thereof.

The vertical downflow embodiment of the present invention is particularly advantageous in that it permits the simplest, most economical and dependable construction; operation, maintenance and repair of systems for producing a glass product.

## Claims

1. A method of producing a glass product by heat processing glass batch material, comprising:
   (a) generating in a heating chamber (11) a hot gas stream having a peak temperature substantially greater than the melting temperature of the glass product;

(b) entraining glass batch material in said hot gas stream;

(c) exhausting (17) said first hot gas stream and entrained glass batch material from said heating chamber into a separation chamber (12) through a nozzle (13) as a directed exhaust stream, said exhaust gas stream at the outlet of said nozzle having in a plane normal to its direction of flow a first internal dimension normal to and not greater than a second internal dimension;

(d) causing said exhaust gas stream including entrained glass batch material exiting from said nozzle (13) to impact on an impact surface (26) spaced from the outlet of said nozzle to provide at least substantial separation of entrained glass batch material from said exhaust stream, at least a substantial portion of said entrained glass batch material being caused to impact and be deposited on said impact surface in at least partial liquid form; and

(e) causing said impacted glass batch material to flow from said impact surface (26) to a collection region (24),

characterized by said impact surface being laterally spaced from adjacent interior surfaces (21) of the separation chamber (12), said nozzle (13) being spaced from the impact surface a distance not greater than about three times said first dimension.

2. A method according to claim 1, in which the heating chamber (11) comprises a combustion chamber into which a gaseous or liquid fuel is introduced (15) and produces products of combustion as said hot gas stream at a temperature substantially greater than the melting temperature of the glass, said glass batch material being entrained in said products of combustion.

3. A method according to claim 2, wherein an oxidizer is introduced (14) into and combined with said fuel in said combustion chamber and at least a portion of said glass batch material is dispersed in said oxidizer prior to its combination with said fuel.

4. A method according to claim 3, in which there is produced a flow of the gaseous fuel and the oxidizer which are introduced and burned in the combustion chamber (11) so as to produce products of combustion at a temperature of at least about 2500° - 4200° Fahrenheit; and in which there is introduced a first portion of said glass batch material in said oxidizer flow prior to introduction of said oxidizer into said combustion chamber and there is introduced a second portion of said material into said products of combustion; said products of combustion and entrained glass batch material being exhausted downwardly from said combustion chamber into the separation chamber, said downwardly directed exhaust stream and entrained glass batch material exiting from said nozzle (13) being caused to impact on the impact surface with a convex surface and having a cross section greater than that of said exhaust stream to provide at least substantial separation of entrained glass batch material from said exhaust stream.

5. A method according to any one of the preceding claims, wherein the hot gas stream of said exhaust stream leaving said impact surface is caused substantially to flow over and adjacent the exposed surface of glass batch material flowing to said collection zone and produce internal shear motion in said flowing glass batch material.

6. A method according to any one of the preceding claims, wherein said glass batch material is entrained in said hot gas stream for a period of about five to one hundred milliseconds.

7. A method according to any one of the preceding claims, wherein the peak temperature of said hot gas stream is about 1371° to 2316°C (2500° to 4200° Fahrenheit) and the velocity of said exhaust stream is at least several hundred feet per second.

8. A method according to any one of claims 1-7, wherein a plurality of linear gas streams is exhausted.

9. A method according to any one of claims 1-7, wherein said exhaust gas stream is generated as a gas stream annular in shape (48) and said impact surface (51) intercepts said exhaust stream and circumferentially changes its direction of flow to an outwardly direction.

10. A method according to any one of the preceding claims, wherein the temperature of said hot gas stream, glass batch material composition and particle distribution, and the period said glass batch material is entrained in said hot gas stream and exhaust stream are selected to cause at least a portion of said glass batch material substantially to reach a fluid condition prior to the time it impacts on said impact surface.

11. Apparatus for producing a glass product by heat processing glass batch material characterized by

(a) a heating chamber (11);

(b) means (14) for generating a hot gas stream having a peak temperature substantially greater than the melting temperature of the glass product;

(c) means (16) for entraining glass batch material in said hot gas stream;

(d) a separation chamber (12) having an upper separation portion (23) and a lower molten glass collection portion (24);

(e) nozzle means (19) having an outlet for receiving and exhausting from said heating chamber (11) said hot gas stream and entrained glass batch material as a directed exhaust stream into said separation chamber upper portion (23), said exhaust stream having at said outlet in a plane normal to its direction of flow a first dimension normal to and not greater than a second dimension;

(f) impact surface means (26) within said separation chamber for receiving said exhaust stream including entrained glass batch material from said nozzle means (19) whereby said entrained glass batch material impacts on said impact surface means, said impact surface means being spaced from the outlet of said nozzle means to provide at least substantial separation of entrained glass batch material from said exhaust stream, said apparatus being operable to cause at least a portion of said glass batch material substantially to reach a fluid condition prior to the time it impacts on said impact surface means; and

(g) means (25) for receiving glass batch material from said impact surface means (26) and directing said received glass batch material to said separation chamber lower portion (24),

characterized by said impact surface being laterally spaced from adjacent interior surfaces (21) of the separation chamber (12), said nozzle being spaced from the impact surface means (26) a distance not substantially greater than about three times said first dimension.

12. Apparatus according to claim 11, wherein the heating chamber comprises a combustion chamber (11) and the gas generating means (14) comprises means for introducing and burning in said combustion chamber a gaseous or liquid fuel producing products of combustion substantially greater than the melting temperature of glass.

13. Apparatus according to claim 12, which includes means for introducing a flow of oxidizer to said combustion chamber and further including means for entraining a portion of said glass batch material in said oxidizer flow prior to its introduction into said combustion chamber.

14. Apparatus according to claim 12 or 13, which includes means for entraining a portion of said glass batch material in said fuel prior to its introduction into said combustion chamber.

15. Apparatus according to any one of claims 11-14, wherein said means (25) for directing received glass batch material to said lower portion includes flow surface means (28) and which includes means (31) for causing said hot gas stream leaving said impact surface means to substantially flow over and adjacent the exposed surface of glass batch material flowing over said flow surface means (28) and produce therein internal shear motion.

16. Apparatus according to claim 15, wherein said flow surface means (28) includes a flow surface extending downwardly from said impact surface means to said separation chamber lower portion (24).

17. Apparatus according to claim 16, wherein said nozzle means (19) has a first line of symmetry and is at least substantially symmetrical with its said first line of symmetry, and additionally including center body means (25) disposed within said separation chamber and including said impact surface means (26) and said flow means (27), said impact surface means (26) facing said nozzle means outlet (19), said impact surface means having a second line of symmetry substantially coincident with said first line of symmetry and being at least substantially symmetrical with its said second line of symmetry, said means (25) for receiving glass batch material including said flow surface extending from said impact surface means to said separation chamber lower portion for receiving and directing glass batch material to said separation chamber lower portion, said flow surface having a third line of symmetry substantially coincident with said second line of symmetry and being at least substantially symmetrical with its said third line of symmetry.

18. Apparatus according to claim 16 or 17, wherein said flow surface is conical in shape.

19. Apparatus according to any one of claims 16-18, which includes cooling means for maintaining said flow surface means (27) at a temperature less than the temperature at which glass melts.

20. Apparatus according to any one of claims 11-19, which includes cooling means for maintaining said impact surface means (26) at a temperature less than the temperature at which glass melts.

21. Apparatus according to any one of claims 11-20, which includes cooling means for maintaining said nozzle means at a temperature less than the temperature at which glass melts.

22. Apparatus according to any one of claims 11-21, wherein said nozzle outlet (19) is circular in shape.

23. Apparatus according to any one of claims 11-21, wherein said nozzle outlet is rectangular in shape.

24. Apparatus according to any one of claims 11-21, wherein said nozzle outlet (48) is annular in shape.

**Revendications**

1. Procédé de production d'un produit de verre par traitement thermique d'un mélange vitrifiable, comprenant :

   (a) la création, dans une chambre de chauffage (11), d'un courant de gaz chaud ayant une température maximale nettement supérieure à la température de fusion du produit de verre,

   (b) l'entraînement du mélange vitrifiable dans le courant de gaz chaud,

   (c) l'évacuation (17) du premier courant de gaz chaud et du mélange vitrifiable entraîné de la chambre de chauffage à une chambre de séparation (12) par une buse (13) sous forme d'un courant évacué dirigé, le courant de gaz évacué à la sortie la buse ayant, dans un plan perpendiculaire à sa direction d'écoulement, une première dimension interne perpendiculaire à une seconde dimension interne et qui ne dépasse pas cette seconde dimension,

   (d) la sortie du courant de gaz d'évacuation, contenant le mélange vitrifiable entraîné, par la buse (13) de manière qu'il vienne frapper une surface de frappe (26) placée à distance de la sortie de la buse et qu'une séparation au moins importante du mélange vitrifiable entraîné soit réalisée par rapport au courant de gaz évacué, une partie importante au moins du mélange vitrifiable entraîné venant frapper la surface de frappe et se déposant sous une forme au moins partiellement liquide, et

   (e) l'écoulement du mélange vitrifiable ainsi projeté de la surface de frappe (26) à une région collectrice (24),

   caractérisé en ce que la surface de frappe est placée latéralement à distance des surfaces internes adjacentes (21) de la chambre de séparation (12), la buse (13) étant séparée de la surface de frappe par une distance qui n'est pas supérieure à trois fois environ la première dimension.

2. Procédé selon la revendication 1, dans lequel la chambre de chauffage (11) est une chambre de combustion dans laquelle un combustible gazeux ou liquide est introduit (15) et forme des produits de combustion constituant le courant de gaz chaud à une température nettement supérieure à la température de fusion du verre, le mélange vitrifiable étant entraîné dans les produits de combustion.

3. Procédé selon la revendication 2, dans lequel un oxydant est introduit (14) dans le combustible et est combiné à celui-ci dans la chambre de combustion, et une partie au moins du mélange vitrifiable est dispersée dans l'oxydant avant sa combinaison au combustible.

4. Procédé selon la revendication 3, dans lequel un courant de combustible gazeux et d'oxydant est formé et est introduit et brûlé dans la chambre de combustion (11) de manière que les produits de combustion soient formés à une température au moins comprise entre environ 1 371 et 2 316 °C (2 500 et 4 200 °F), et en ce qu'une première partie du mélange vitrifiable est introduite dans le courant d'oxydant avant l'introduction de l'oxydant dans la chambre de combustion, et une seconde partie du mélange vitrifiable est introduite dans les produits de combustion, les produits de combustion et le mélange vitrifiable entraîné étant évacués vers le bas sous la chambre de combustion vers la chambre de séparation, le courant d'évacuation étant dirigé vers le bas et le mélange vitrifiable entraîné sortant de la buse (13) et venant frapper la surface de frappe qui est une surface convexe et qui a une section supérieure à celle du courant d'évacuation de manière qu'une séparation au moins importante du mélange vitrifiable entraîné du courant de gaz évacué soit assurée.

5. Procédé selon l'une quelconque des revendications précédentes, dans lequel le courant de gaz chaud du courant évacué quittant la surface de frappe s'écoule pratiquement sur la surface exposée du mélange vitrifiable qui s'écoule vers la zone collectrice et près de cette surface et crée un gradient interne de vitesse dans le mélange vitrifiable qui s'écoule.

6. Procédé selon l'une quelconque des revendications précédentes, dans lequel le mélange vitrifiable est entraîné dans le courant de gaz chaud pendant un temps compris entre 5 et 100 ms.

7. Procédé selon l'une quelconque des revendications précédentes, dans lequel la température maximale du courant de gaz chaud est comprise entre 1 371 et 2 316 °C (2 500 et 4 200 °F) et la vitesse du courant évacué est au moins de quelques centaines de pieds par seconde.

8. Procédé selon l'une quelconque des revendications 1 à 7, dans lequel plusieurs courants rectilignes de gaz sont évacués.

9. Procédé selon l'une quelconque des revendications 1 à 7, dans le courant de gaz évacué est créé sous forme d'un courant de gaz de configuration annulaire (48) et la surface de frappe (51) intercepte le courant évacué et change circonférentiellement sa direction d'écoulement vers l'extérieur.

10. Procédé selon l'une quelconque des revendications précédentes, dans lequel la température du courant de gaz chaud, de la composition du mélange vitrifiable et de la distribution des particules, et la période pendant laquelle le mélange vitrifiable est entraîné dans le courant de gaz chaud et le courant évacué sont choisies de manière qu'une partie au moins du mélange vitrifiable atteigne un état fluide pratiquement avant le moment de la frappe de la surface de frappe.

11. Appareil de production d'un produit de verre par traitement thermique d'un mélange vitrifiable, caractérisé par
    (a) une chambre de chauffage (11),
    (b) un dispositif (14) générateur d'un courant de gaz chaud ayant une température maximale nettement supérieure à la température de fusion du produit de verre,
    (c) un dispositif (16) d'entraînement du mélange vitrifiable dans le courant de gaz chaud,
    (d) une chambre de séparation (12) ayant une partie supérieure (23) de séparation et une partie inférieure (24) collectrice de verre fondu,
    (e) un dispositif (19) à buse ayant une sortie destinée à recevoir et évacuer de la chambre de chauffage (11) le courant de gaz chaud et le mélange vitrifiable entraîné sous forme d'un courant évacué dirigé dans la partie supérieure (23) de la chambre de séparation, le courant évacué ayant, à la sortie et dans un plan normal à sa direction d'écoulement, une première dimension perpendiculaire à une seconde dimension et qui n'est pas supérieure à cette seconde dimension,
    (f) un dispositif (26) formant une surface de frappe dans la chambre de séparation et destiné à recevoir le courant évacué contenant le mélange vitrifiable entraîné provenant du dispositif (19) à buse de manière que le mélange vitrifiable vienne frapper le dispositif à surface de frappe, ce dernier étant placé à une certaine distance de la sortie du dispositif à buse afin qu'une séparation au moins importante du mélange vitrifiable entraîné et du courant évacué soit assurée, l'appareil provoquant la mise d'une partie au moins du mélange vitrifiable à un état fluide avant la frappe du dispositif à surface de frappe, et
    (g) un dispositif (25) destiné à recevoir le mélange vitrifiable du dispositif (26) à surface de frappe et à diriger le mélange vitrifiable reçu vers la partie inférieure (24) de la chambre de séparation,
    caractérisé en ce que la surface de frappe est séparée latéralement des surfaces internes adjacentes (21) de la chambre de séparation (12), la buse étant séparée du dispositif (26) à surface de frappe par une distance qui n'est pas notablement supérieure à trois fois environ la première dimension.

12. Appareil selon la revendication 11, dans lequel la chambre de chauffage comporte une chambre de combustion (11) et le dispositif (14) générateur de gaz comporte un dispositif destiné à introduire et brûler, dans la chambre de combustion, un combustible liquide ou gazeux créant des produits de combustion à une température nettement supérieure à la température de fusion du verre.

**13.** Appareil selon la revendication 12, qui comporte un dispositif d'introduction d'un courant d'un oxydant dans la chambre de combustion, et comprenant en outre un dispositif d'entraînement d'une partie du mélange vitrifiable dans le courant d'oxydant avant son introduction dans la chambre de combustion.

**14.** Appareil selon la revendication 12 ou 13, qui comporte un dispositif d'entraînement d'une partie du mélange vitrifiable dans le combustible avant son introduction dans la chambre de combustion.

**15.** Appareil selon l'une quelconque des revendications 11 à 14, dans lequel le dispositif (25) destiné à diriger le mélange vitrifiable reçu vers la partie inférieure comporte un dispositif (28) à surface d'écoulement et qui comporte un dispositif (31) destiné à provoquer l'écoulement du courant de gaz chaud quittant le dispositif à surface de frappe sur la surface exposée du mélange vitrifiable s'écoulant sur le dispositif (28) à surface d'écoulement et près de cette surface exposée, et la création d'un gradient interne de vitesse dans ce courant.

**16.** Appareil selon la revendication 15, dans lequel le dispositif (28) à surface d'écoulement comporte une surface d'écoulement qui descend depuis le dispositif à surface de frappe vers la partie inférieure (24) de la chambre de séparation.

**17.** Appareil selon la revendication 16, dans lequel le dispositif (19) à buse a un premier axe de symétrie et est au moins pratiquement symétrique par rapport à son premier axe de symétrie, et il comprend en outre un corps central (25) placé dans la chambre de séparation et comprenant le dispositif (26) à surface de frappe et le dispositif d'écoulement (27), le dispositif (26) à surface de frappe étant tourné vers la sortie (19) du dispositif à buse, le dispositif à surface de frappe ayant un second axe de symétrie qui coïncide pratiquement avec le premier axe de symétrie et qui est au moins pratiquement symétrique par rapport à son second axe de symétrie, le dispositif (25) destiné à recevoir le mélange vitrifiable comprenant la surface d'écoulement qui est disposée du dispositif à surface de frappe à la partie inférieure de la chambre de séparation de manière qu'il reçoive et dirige le mélange vitrifiable vers la partie inférieure de la chambre de séparation, la surface d'écoulement ayant un troisième axe de symétrie qui coïncide pratiquement avec le second axe de symétrie et étant au moins sensiblement symétrique par rapport au troisième axe de symétrie.

**18.** Appareil selon la revendication 16 ou 17, dans lequel la surface d'écoulement a une forme conique.

**19.** Appareil selon l'une quelconque des revendications 16 à 18, comprenant un dispositif de refroidissement destiné à maintenir le dispositif (27) à surface d'écoulement à une température inférieure à celle à laquelle le verre fond.

**20.** Appareil selon l'une quelconque des revendications 11 à 19, qui comporte un dispositif de refroidissement destiné à maintenir le dispositif (26) à surface de frappe à une température inférieure à la température à laquelle le verre fond.

**21.** Appareil selon l'une quelconque des revendications 11 à 20, qui comporte un dispositif de refroidissement destiné à maintenir le dispositif à buse à une température inférieure à la température à laquelle le verre fond.

**22.** Appareil selon l'une quelconque des revendications 11 à 21, dans lequel la sortie (19) de la buse a une forme circulaire.

**23.** Appareil selon l'une quelconque des revendications 11 à 21, dans lequel la sortie de la buse a une forme rectangulaire.

**24.** Appareil selon l'une quelconque des revendications 11 à 21, dans lequel la sortie (48) de la buse a une forme annulaire.

**Patentansprüche**

**1.** Verfahren zum Erzeugen eines Glasproduktes durch Wärmebehandlung von Glasgemengegut, in dem

(a) in einer Heizkammer (11) ein Heißgasstrom erzeugt wird, dessen Spitzentemperatur beträchtlich über der Schmelztemperatur des Glasproduktes liegt;

(b) in den Heißgasstrom von ihm mitzuführendes Glasgemengegut eingebracht wird;

(c) der erste Heißgasstrom und das von ihm mitgeführte Glasgemenge durch eine Düse (13) als gerichteter Abgasstrom aus der Heizkammer in eine Trennkammer (12) ausgeblasen (17) werden, wobei der Abgasstrom an der Mündung der Düse in einer zu seiner Strömungsrichtung normalen Ebene eine erste Innendimension hat, die zu einer zweiten Innendimension normal und nicht größer ist als diese;

(d) der aus der Düse (13) austretende, mitgeführtes Glasgemenge enthaltende Abgasstrom zum Aufprallen auf einer im Abstand von der Mündung der Düse angeordneten Prallfläche (26) veranlaßt und dadurch das mitgeführte Glasgemenge mindestens im wesentlichen von dem Abgasstrom getrennt wird, wobei mindestens ein beträchtlicher Teil des mitgeführten Glasgemengegutes veranlaßt wird, in einem mindestens teilweise flüssigen Zustand auf der Prallfläche aufzuprallen und darauf abgeschieden zu werden; und

(e) das aufgeprallte Glasgemengegut veranlaßt wird, von der Prallfläche (26) in einen Sammelbereich (24) zu fließen,

dadurch gekennzeichnet, daß die Prallfläche im seitlichen Abstand von benachbarten Innenflächen (21) der Trennkammer (12) angeordnet ist und daß die Düse (13) von der Prallfläche in einem Abstand angeordnet ist, der nicht größer ist als ungefähr das Dreifache der ersten Dimension.

2. Verfahren nach Anspruch 1, dadurch gekennzeichnet, daß die Heizkammer (11) einen Brennraum enthält, in den ein gasförmiger oder flüssiger Brennstoff eingeleitet (15) wird, der den genannten Heißgasstrom bildende Verbrennungsprodukte bei einer Temperatur erzeugt, die beträchtlich höher ist als die Schmelztemperatur des Glases, und daß das Glasgemengegut von den Verbrennungsprodukten mitgeführt wird.

3. Verfahren nach Anspruch 2, dadurch gekennzeichnet, daß in dem Brennraum ein Oxidationsmittel in den Brennstoff eingeführt (14) und mit ihm vereinigt wird und daß mindestens ein Teil des Glasgemengegutes in dem Oxidationsmittel dispergiert wird, bevor dieses mit dem Brennstoff vereinigt wird.

4. Verfahren nach Anspruch 3, in dem ein Strom erzeugt wird, der aus dem gasförmigen Brennstoff und dem Oxidationsmittel besteht, die in den Brennraum (11) eingeführt und darin unter Erzeugung von Verbrennungsprodukten bei einer Temperatur von mindestens 1371 bis 2316°C verbrannt werden, ein erster Teil des Glasgemengegutes in den Oxidationsmittelstrom vor dem Einführen des Oxidationsmittels in den Brennraum eingeführt wird, ein zweiter Teil des genannten Gutes in die Verbrennungsprodukte eingeführt wird; die Verbrennungsprodukte und das mitgeführte Glasgemengegut von dem Brennraum abwärts in die Trennkammer abgeblasen werden, der aus der Düse (13) austretende abwärtsgerichtete Abgasstrom und das mitgeführte Glasgemengegut zum Aufprallen auf der Prallfläche mit einer konvexen Fläche und mit einem Querschnitt veranlaßt werden, der großer ist als der des Abgasstromes, so daß das mitgeführte Glasgemengegut mindestens im wesentlichen von dem Abgasstrom getrennt wird.

5. Verfahren nach einem der vorhergehenden Ansprüche, dadurch gekennzeichnet, daß der die Prallfläche verlassende Heißgasstrom des Abgasstroms veranlaßt wird, im wesentlichen über die freiliegende Fläche und im Bereich der freiliegenden Fläche des der Sammelzone zufließenden Glasgemengegutes zu strömen und in dem strömenden Glasgemengegut eine interne Scherbewegung hervorzurufen.

6. Verfahren nach einem der vorhergehenden Ansprüche, dadurch gekennzeichnet, daß das Glasgemengegut etwa fünf bis hundert Millisekunden lang von dem Heißgasstrom mitgeführt wird.

7. Verfahren nach einem der vorhergehenden Ansprüche, dadurch gekennzeichnet, daß der Heißgasstrom eine Spitzentemperatur von etwa 1371 bis 2316°C und der Abgasstrom eine Geschwindigkeit von mindestens einem Mehrfachen von 30,48 m/s hat.

8. Verfahren nach einem der Ansprüche 1 bis 7, dadurch gekennzeichnet, daß eine Mehrzahl von linearen Gasströmen abgeblasen werden.

9. Verfahren nach einem der Ansprüche 1 bis 7, dadurch gekennzeichnet, daß der Abgasstrom als ein ringförmiger Gasstrom (48) abgeblasen wird und daß die Prallfläche (51) den Abgasstrom abfängt und diesen in der Umfangsrichtung auswärts ablenkt.

10. Verfahren nach einem der vorhergehenden Ansprüche, dadurch gekennzeichnet, daß die Temperatur des Heißgasstromes, die Zusammensetzung und Korngrößenverteilung des Glasgemengegutes und die Zeit, in der das Glasgemengegut von dem Heißgasstrom und dem Abgasstrom mitgeführt wird, so ausgewählt werden, daß mindestens ein Teil des Glasgemengegutes vor dem Aufprallen auf der Prallfläche einen im wesentlichen fluiden Zustand annimmt.

11. Vorrichtung zum Erzeugen eines Glasproduktes durch Wärmebehandlung von Glasgemengegut, gekennzeichnet durch

(a) eine Heizkammer (11);

(b) eine Einrichtung (14) zum Erzeugen eines Heißgasstromes, dessen Spitzentemperatur beträchtlich höher ist als die Schmelztemperatur des Glasproduktes;

(c) eine Einrichtung (16) zum Einbringen von mitzuführendem Glasgemengegut in den Heißgasstrom;

(d) eine Trennkammer (12) mit einem oben angeordneten Trennteil (23) und einem unten angeordneten Teil (24) zum Sammeln von schmelzflüssigem Glas;

(e) eine Düseneinrichtung (19) mit einer Mündung zum Empfangen und Ausblasen des Heißgasstroms und des mitgeführten Glasgemengegutes aus der Heizkammer (11) in Form eines gerichteten Abgasstromes in den oberen Teil (23) der Trennkammer, wobei der Abgasstrom an der genannten Mündung in einer zu seiner Strömungsrichtung normalen Ebene eine erste Dimension hat, die zu einer zweiten Dimension normal und größer ist als diese;

(f) eine in der Trennkammer angeordnete Prallflächeneinrichtung (26) zum Empfang des mitgeführten Glasgemengegut enthaltenden Abgasstromes von der Düseneinrichtung (19), so daß das mitgeführte Glasgemengegut auf der Prallfläche aufprallt, die im Abstand von der Mündung der Düseneinrichtung angeordnet ist, so daß das mitgeführte Glasgemengegut von dem Abgasstrom im wesentlichen getrennt wird, wobei die Vorrichtung derart betreibbar ist, daß mindestens ein Teil des Glasgemengegutes vor dem Aufprall auf der Prallflächeneinrichtung einen im wesentlichen fluiden Zustand annimmt; und

(g) eine Einrichtung (25) zum Empfangen von Glasgemengegut von der Prallflächeneinrichtung (26) und zum Führen des empfangenen Glasgemengegutes zu dem unteren Teil (24) der Trennkammer,

dadurch gekennzeichnet, daß die Prallfläche im seitlichen Abstand von benachbarten Innenflächen (21) der Trennkammer (12) angeordnet ist und daß die Düse von der Prallflächeneinrichtung (26) in einem Abstand angeordnet ist, der nicht beträchtlich größer ist als ungefähr das Dreifache der ersten Dimension.

12. Vorrichtung nach Anspruch 11, dadurch gekennzeichnet, daß die Heizkammer einen Brennraum (11) enthält und daß die Gaserzeugungseinrichtung (14) eine Einrichtung zum Führen eines gasförmigen oder flüssigen Brennstoffs in den Brennraum und zum Verbrennen des Brennstoffs in dem Brennraum unter Erzeugung von Verbrennungsprodukten mit einer Temperatur besitzt, die beträchtlich höher ist als die Schmelztemperatur von Glas.

13. Vorrichtung nach Anspruch 12 mit einer Einrichtung zum Einführen eines Stroms eines Oxidationsmittels in den Brennraum und mit einer Einrichtung zum Einbringen eines mitzuführenden Teils des Glasgemengegutes in den Strom des Oxidationsmittels vor dem Einbringen desselben in den Brennraum.

14. Vorrichtung nach Anspruch 12 oder 13, mit einer Einrichtung zum Einbringen eines mitzuführenden Teils des Glasgemengegutes in den Brennstoff vor dessen Einführung in den Brennraum.

15. Vorrichtung nach einem der Ansprüche 11 bis 14, dadurch gekennzeichnet, daß die Einrichtung (25) zum Führen empfangenen Glasgemengegutes zu dem genannten unteren Teil eine Strömungsflächeneinrichtung (28) besitzt und daß eine Einrichtung (31) vorgesehen ist, die dazu dient, den die Prallflächeneinrichtung verlassenden Heißgasstrom zu veranlassen, im wesentlichen über die freiliegende Fläche des über die Strömungsflächeneinrichtung (28) fließenden Glasgemengegutes und im Bereich dieser freiliegenden Fläche zu strömen und darin eine interne Scherbewegung herbeizuführen.

16. Vorrichtung nach Anspruch 15, dadurch gekennzeichnet, daß die Strömungsflächeneinrichtung (28) eine Strömungsfläche besitzt, die sich von der Prallflächeneinrichtung abwärts zu dem unteren Teil (24) der Trennkammer erstreckt.

17. Vorrichtung nach Anspruch 16, dadurch gekennzeichnet, daß die Düseneinrichtung (19) eine erste Symmetrieachse besitzt und in Bezug auf die erste Symmetrieachse mindestens im wesentlichen symmetrisch ist und daß ferner eine Zentral-körpereinrichtung (25) vorgesehen ist, die in der Trennkammer angeordnet ist und die Prallflächeneinrichtung (26) und die Strömungseinrichtung (27) umfaßt, daß die Prallflächeneinrichtung (26) der Mündung (19) der Düseneinrichtung zugekehrt ist, daß die Prallflächeneinrichtung eine zweite Symmetrieachse besitzt, die mit der ersten Symmetrieachse im wesentlichen übereinstimmt und in Bezug auf die die Prallflächeneinrichtung im wesentlichen symmetrisch ist, daß die Einrichtung (25) zum Empfangen von Glasgemengegut die genannte Strömungsfläche aufweist, die sich von der Prallflächeneinrichtung zu dem unteren Teil der Trennkammer erstreckt und dazu dient, Glasgemengegut zu empfangen und zu dem unteren Teil der Trennkammer zu führen, daß die genannte Strömungsfläche eine dritte Symmetrieachse besitzt, die mit der zweiten Symmetrieachse im wesentlichen übereinstimmt, und daß die Strömungsführungsfläche in Bezug auf die dritte Symmetrieachse im wesentlichen symmetrisch ist.

18. Vorrichtung nach Anspruch 16 oder 17, dadurch gekennzeichnet, daß die Strömungsfläche eine konische Form hat.

19. Vorrichtung nach einem der Ansprüche 16 bis 18 mit einer Kühleinrichtung zum Halten der Strömungsflächeneinrichtung (27) auf einer Temperatur unter der Schmelztemperatur von Glas.

20. Vorrichtung nach einem der Ansprüche 11 bis 19 mit einer Kühleinrichtung zum Halten der Prallflächeneinrichtung (26) auf einer Temperatur unter der Schmelztemperatur von Glas.

21. Vorrichtung nach einem der Ansprüche 11 bis 20 mit einer Kühleinrichtung zum Halten der Düseneinrichtung auf einer Temperatur unter der Schmelztemperatur von Glas.

22. Vorrichtung nach einem der Ansprüche 11 bis 21, dadurch gekennzeichnet, daß der Düsenauslaß (19) kreisförmig ist.

23. Vorrichtung nach einem der Ansprüche 11 bis 21, dadurch gekennzeichnet, daß die Düsenmündung rechteckig ist.

24. Vorrichtung nach einem der Ansprüche 11 bis 21, dadurch gekennzeichnet, daß die Düsenmündung (48) ringförmig ist.

*Fig 1*

_Fig_ 2

_Fig_ 3

_Fig_ 4

58a 58b 58c 58d

6 6

57 56 56

Fig 5

56 56

58a 58d

58b 58c

Fig 6